# EUROPEAN PATENT APPLICATION

(11) **EP 4 354 238 A1**
(43) Date of publication of application: **17.04.2024**
(21) Application number: 23202757.3
(22) Date of filing: 10.10.2023
(51) Int. Cl.: G05B 19/4061

(54) **COLLISION DETECTION METHOD FOR A MACHINE TOOL**

(30) Priority: 11.10.2022 IT 202200020943
(71) Applicant: SCM Group S.p.A., 47921 Rimini (RN) (IT)
(72) Inventor: BILLI, Denis, 47921 RIMINI (IT)
(74) Representative: Tiburzi, Andrea

(57) **Abstract**

Collision detection method for a machine tool control unit comprising the steps (a) determining at least one topological characteristic of a machining tool (b) selecting at least one reference point on a longitudinal development axis of the machining tool and in correspondence with the topological characteristic (c) generating a first orthogonal projection of the machining tool on a projection plane e (d) detecting a potential collision between the machining tool and the hood of the machine, based on a comparison between the first orthogonal projection and a second orthogonal projection of the hood on the projection plane.

## Description

The present invention relates to a method of detecting collision for a machine tool, particularly for a machine tool comprising a suction or blowing hood and a machining tool.

The present invention also relates to a machine tool and a computer program product for controlling a machine tool.

### Field of the invention

More specifically, the invention relates to a gantry type machine for machining pieces made of wood or other materials such as plastic, glass, fiberglass, metal, ceramic and the like, comprising a control unit for detecting a potential collision between a portion of the suction or blowing hood and the machining tool, or between the suction or blowing hood and the work piece.

The following description will be directed to a gantry-type machine for machining panels, in particular panels or wooden beams, but it is well evident how the same does not have to be considered limited to this specific use, it may in fact be directed to other types of machines, such as for example pass-through machines like edging machines, drill, sanding machines, and squaring machines.

### Background

Currently, in the machining of panels and the like, numerically controlled machines or work centres are known. These machines are able to perform a large number of operations on work pieces, arranged on a work plane, such as, for example, milling, drilling, edging, rounding, and so on, by means of a machining unit that supports a machining tool, and can move along one, two or three linear axes, and rotate about one, two or three axes of rotation.

The machining unit is supported by a gantry or cross-beam disposed over the work plane. Such a gantry may have, for example, an inverted "U" shape or an "L" shape.

As it is known, the machine comprises a tool store which houses various types of machining tools, which the machining unit can use by changing the machining tool as a function of the type of machining to be executed on the work piece.

Each type of machining requires the execution, by the machine, of a series of operations or steps in order to complete such a specific machining.

Each machining program is associated with a respective program for moving the machining unit, which comprises a series of sequential operations that the machine must perform on the work piece, so that the respective machining operation associated with that machining program is completed, and next machining program can be started.

The machining unit comprises a suction or blowing hood that completely surrounds the machining unit itself and is capable of drawing or blowing away residual material derived from the machining of a work piece.

In particular, machines are known which comprise reducible hoods, which can be extended, by means of pneumatic or electric actuation, along a direction of development orthogonal to the work plane, up to arriving in the vicinity of the work plane so as to facilitate the blowing or suctioning action.

In these so-called gantry-type machines, which perform machining during the movement of the gantry on the work plane and around the work piece, the position of the hood relative to the work plane is conventionally inputted manually, by the operator, in the working program, based on the operator experience.

It is clear that this procedure is not able to maximize the blowing or suctioning action during the machining process, since the position of the hood with respect to the working plane may not be optimal, especially when the machining unit is a so-called "5-axis" machining unit, i.e., the machining unit has three axes for linear movement and two rotation axes; in fact, when the machining unit performs an operation with interpolation of all of said axes, the positioning of the hood is particularly ineffective and difficult.

Another disadvantage of this procedure is that the manual positioning operation of the hood relative to the work plane can still result in a collision between the machining tool and the hood, or between the hood and the work piece being machined, as the positioning is based on the operator experience.

Another disadvantage is that the manual operation required for positioning the hood relative to the work plane does not allow the operator to continuously perform the design process, resulting for example in a delay in the design process and hence in the production of a machined work piece.

### Aim of the invention

In the light of the above, it is, therefore, a scope of the present invention to overcome said disadvantages by providing a collision detection method for a control unit of a machine tool, so as to detect a potential collision between the machining tool and the hood and, if necessary, adjusting a height of the hood with respect to a work plane so as to avoid a potential collision between the machining tool and the hood or between the hood and the piece to be machined.

A further scope of the present invention is to provide the instruments necessary for carrying out the method and the apparatuses that perform this method.

### Object of the invention

Therefore, a specific object of the present invention is a collision detection method for a machine tool control unit as defined in claim 1, a machine tool as defined in claim 16 and a computer program product for controlling a machine tool as defined in claim 19.

Preferred embodiments are defined in the dependent claims.

### Brief description of the figures

The present invention will now be described for illustrative but not limitative purposes, according to its preferred embodiments/variants, with particular reference to the figures of the accompanying drawings, in which:
FIG. 1 shows a perspective view of an embodiment of the machine of the present invention;
FIG. 2 shows a perspective view of a machining unit of the machine according to an embodiment of the present invention;
FIG. 3 shows a schematic perspective view of a machining unit of the machine including a machining tool and a suction or blowing hood according to an embodiment of the present invention;
FIG. 4 shows a block diagram of a method of detecting collision for a control unit of a machine tool, according to an embodiment of the present invention;
FIG. 5A shows a lateral section on the XZ plane of the machining tool depicted in FIG. 1, 2 or 3 being symmetrical along the longitudinal axis. FIG. 5A also shows a corresponding side section of the solid of revolution of the machining tool, according to an embodiment of the present invention;
FIG. 5B shows a side cross-section on the XZ-plane of the machining tool depicted in FIG. 1, 2 or 3 that is asymmetrically extended along the longitudinal axis. FIG. 5B also shows a corresponding side section of the solid of revolution of the machining tool, according to the present invention;
FIG. 6 shows a graph of a lateral section on the XZ-plane of a machining tool and a suction or blowing hood, according to an embodiment of the present invention;
FIG. 7 shows a graph of an orthogonal projection of a machining tool and a suction or blowing hood, according to an embodiment of the present invention.

### Detailed description

In the various figures, similar parts will be indicated by the same reference numerals.

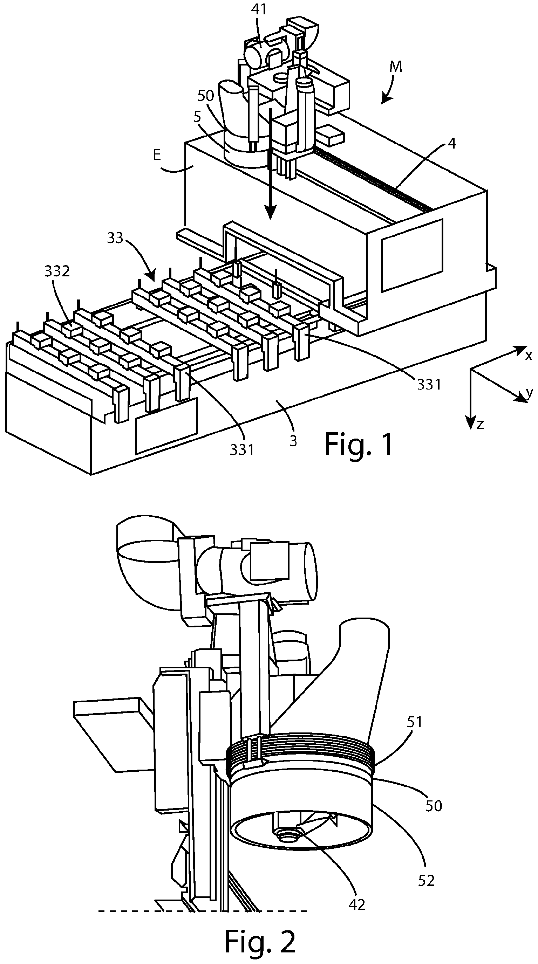

Referring to FIG. 1, the machine M comprises a base 3, extending along a first development axis X on which a work plane 33 is defined, on which one or more panels or other work pieces can rest and be fixed.

The same machine M also comprises a gantry 4, i.e. a cross member, arranged above the work plane 33 and connected to the base 3 in a movable manner on a first axis X.

The gantry 4 may have, for example, an inverted U-shape or L-shape.

On one side of the gantry 4, a machining unit 41 is mounted in a movable manner along a second axis Y substantially orthogonal to the first axis X.

The work plane 33 includes a plurality of bars 331, slidingly coupled to the base 3 along the first axis X.

Each bar 331, in turn, comprises a plurality of locking means 332, in particular vacuum suction cups, to allow, in a known manner, to lock the work piece during machining. In other embodiments, not shown in the figures, said locking means 332 are clamps or vices.

In a further embodiment (not shown in the figures, the work plane 33 is a so-called a "multi-functional plane", i.e. a continuous plane provided with holes connected to a vacuum source, which by means of the insertion of suitable gaskets within grooves formed in the work plane itself, allows, in a known manner, to fix of the work piece to be machined.

The machining unit 41 is movable at least along a third axis Z (vertical) substantially orthogonal to the first axis X and to the second axis Y.

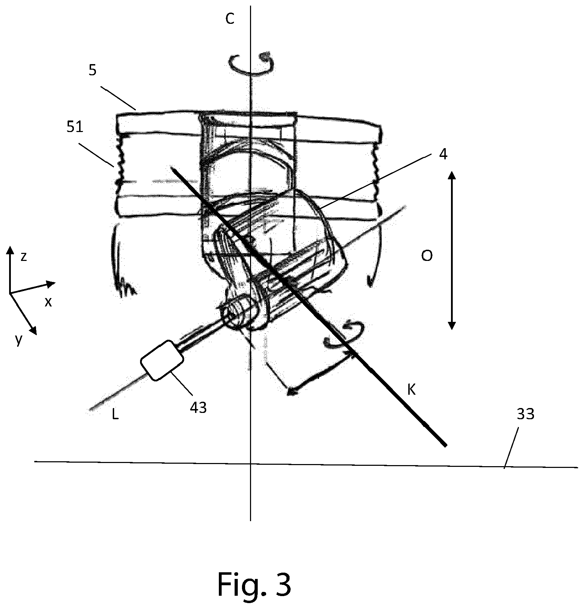

The machining unit 41 can also rotate about a first rotation axis C and to a second rotation axis K, as shown for example in FIG. 3. According to further variants, the machining unit 41 can rotate about three or more axes of rotation.

As an alternative or in addition to the possibility of moving the machining unit 41 along said first axis X, movement means (for example a conveyor belt) can be provided in the machine M, for moving said one or more panels or other pieces along said first axis X.

However, in general, in the machine M moving means provide relative movement along the first axis X between said one or more panels or other pieces and the operating head 41.

The machining unit 41 is depicted in FIG. 2 and comprises, in turn, a spindle 42 suitable to receive a tool for carrying out one or more machining operations on the work piece arranged on the work plane 33.

In the machine M there may be a safety housing, i.e. a safety structure arranged around the gantry 4, so as to provide coverage on at least three sides, while being movable integrally with the gantry 4 itself.

The machine M also includes a tool store (not shown in the figures) for housing one or more tools, for performing, in a known manner, a change of tool. The tool store can be integrally connected to the gantry 4, for example at the outer side of a strut of the gantry 4, or arranged in a fixed manner on the base 3.

The piece P can be essentially a panel such as furniture doors, or parquet panels made of wood, plastic, or any other material (e.g. plastic, glass, composite materials, ferrous materials), or a large panel for making wooden houses, or even a wooden beam, or an elongated wooden piece for making fixtures.

As shown in FIG. 3, the machining unit 41 includes a machining tool. The machining tool 43 may include, for example, a tool with cutting elements, such as a milling cutter or a disk blade, a drill bit, a smoothing tool such as, for example, a rotary cutter or disc, a backing pad, or a brush. The machining tool 43 is configured, by means of the movement of the machining unit 41, to come into contact with the upper surface of the work piece P, arranged above a flat portion of the work plane 33.

The machine M further comprises a suction or blowing hood 5 capable of drawing or blowing residual material derived from the machining of the work piece P.

The hood 5 comprises a ring 50 to which is connected a cylindrical body 51, of the folding type, or the like, and a plurality of bristles 52 or flaps of plastic material, arranged along the perimeter of the ring 50 of the hood 5.

The hood 5 generates an air movement so as to draw or blow away the residual material, such as debris, chips, dust and/or smoke produced by the machining process.

The hood 5 can also be connected to a blowing system 6, such as a fan, able to input/eject air into/from the hood 5.

The hood 5 completely surrounds the machining unit 41 and can be extended or reduced along a direction of development O orthogonal to the work plane 33.

The orthogonal development direction O may correspond with the first axis Z perpendicular to the work plane 33.
During normal operation of the machine M, when it is necessary to perform the machining of a work piece P, the piece P is positioned and fixed on said work plane 33, in particular on said locking means 332.

The machining unit 41, by means of the movement of the gantry 4 along the first axis X and by means of its movements along the second axis Y and/or the third axis Z, and/or the rotations around the first rotation axis C and/or the second rotation axis K, is positioned so as to execute the programmed machining on the work piece P, by means of the machining tool 43.

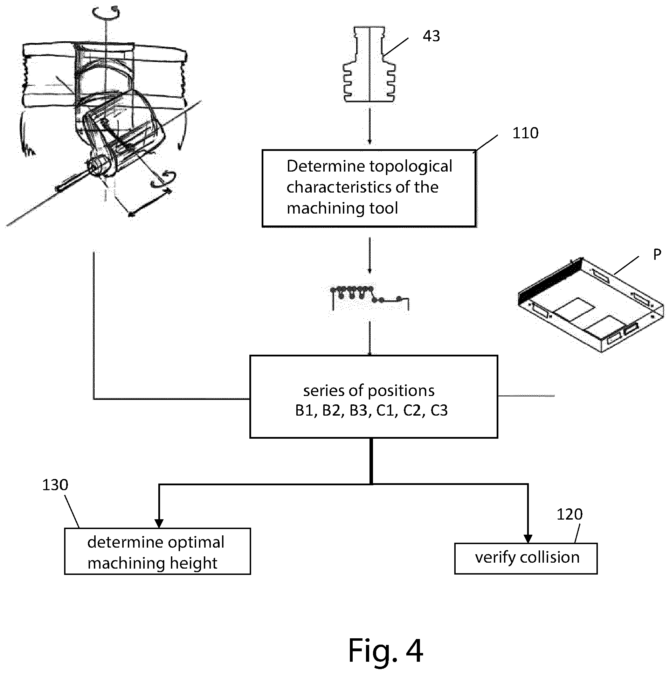

The machine tool M further comprises a control unit in which the machining programs are stored and which commands the machining unit 41 as a function of them. The control unit thus has the task of coordinating the actions needed for the execution of one or more machine instruction to perform the collision detection method shown below with reference to FIG. 4.

The control unit may be operatively connected with a user interface to present an information indicative of the potential collision.

Subsequently, or during the machining, a step of removing the residues resulting from the machining performed on the work piece P is performed, for example by blowing or suctioning action.

Referring now to FIG. 4, a method of detecting collision for a control unit of a machine tool M is depicted as described with respect to FIGS. 1-3. The method for operating the machine M is performed as follows.

The method may include an initial preparation step in which the machine tool M is supplied with a machining tool 43.

The method further comprises a step of determining 110 a topological characteristic 44, 62 of the machining tool 43 of the machine M.

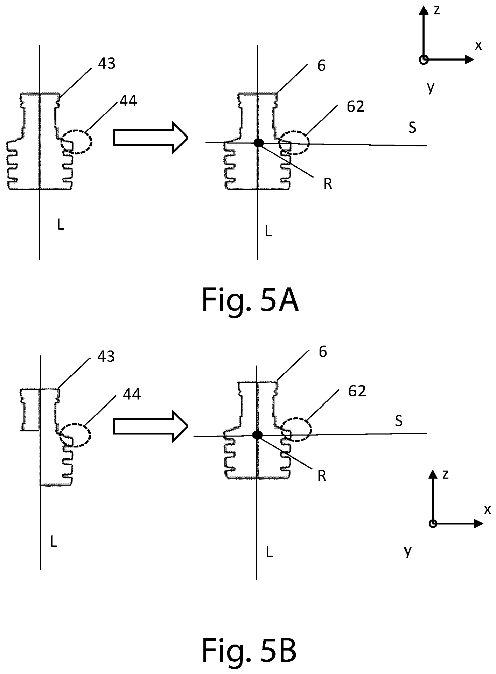

Referring to FIGS. 5A and 5B, the topological characteristic 44, 62 corresponds to an outer point disposed on the surface of the machining tool 43.

The topological feature 44, 62 may include a protrusion or a recess along the surface of the machining tool 43. For example, the protrusion may develop along a surface portion of the machining tool 43 and be of particular interest in order to determine a potential collision. In particular, the projection may comprise a maximum distance with respect to the longitudinal extension axis L being greater than or equal to the maximum distance from the longitudinal extension axis L of each of the remaining protrusions and/or recesses of the machining tool 43.

The step of determining a topological characteristic 44, 62 may comprise the generation of a solid of revolution 6 corresponding to the machining tool 43 and the subsequent determination of a topological characteristic 62 of the solid of revolution 6 thus generated. The solid of revolution 6 is obtained by the rotation of the machining tool 43 around the longitudinal extension axis L of the machining tool 43. In this case the topological characteristic 62 will be a point arranged on the surface of the solid of revolution 6, but in any case, corresponding to a topological characteristic of the machining tool 43, as shown for example in FIGS. 5A and 5B.

Next, it is determined whether at least one reference point R is on the longitudinal extension axis L of the machining tool. The reference point R is arranged in correspondence of the topological feature 44, 62 as shown for example in FIG. 5A or 5B. The method may identify one or more reference points along the axis L, each corresponding to a determined topological characteristic of the solid of revolution 6 and/or the machining tool 43.

The method further comprises a step of generating, by means of a sectional plane S passing through the determined reference point R, or selected, a first orthogonal projection 7 of the machining tool 43.

The sectional plane S may be a plane orthogonal to the axis of longitudinal extension L of the machining tool, as shown, for example, in FIG. 5A or 5B.

The projection may be performed on a projection plane PJ orthogonal to the direction of development O of the hood 5. The projection plane PJ may thus be a plane parallel to the projection plane 33.

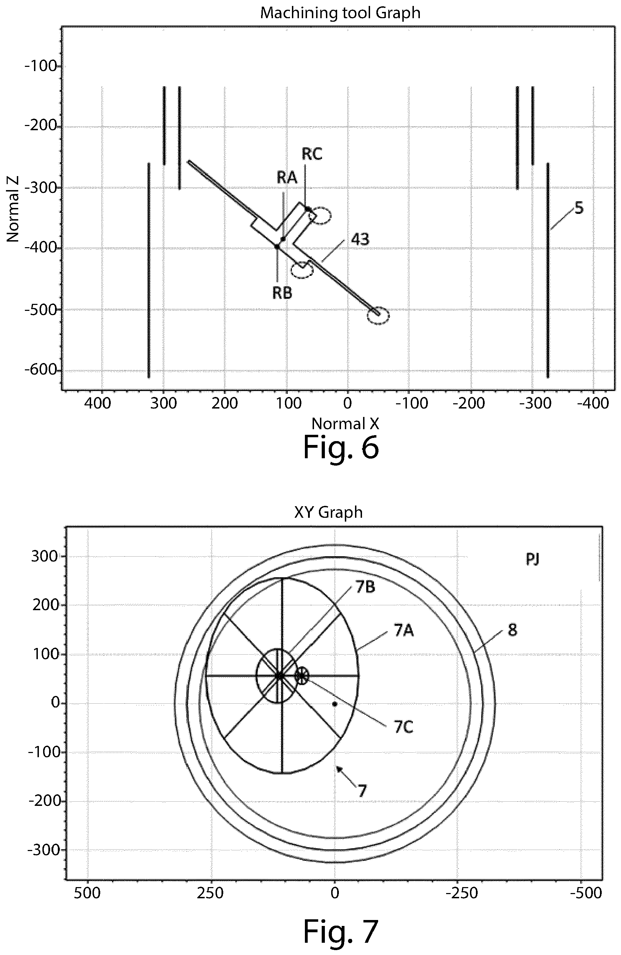

The projection plane PJ is shown in FIG. 7.

The first orthogonal projection 7 may comprise, for example, an orthogonal projection 7 on the projection plane PJ of the solid of revolution 6, so as to obtain a projection that represents the rotational movement of the machining tool 43 (also asymmetric) during the machining or use of the machine M.

The orthogonal projection 7 may comprise one or more orthogonal projections obtained by one or more sectional planes S.

For example, with reference to FIGS. 6 and 7, the orthogonal projection 7 comprises (i) an orthogonal projection 7A corresponding to the projection obtained by means of a sectional plane S passing through the reference point RA along the longitudinal extension axis L of the machining tool 43, (ii) an orthogonal projection 7B corresponding to the projection obtained by means of a sectional plane S passing through the reference point RB along the longitudinal extension axis L of the machining tool 43, and (iii) an orthogonal projection 7C corresponding to the projection obtained by means of a sectional plane S passing through the reference point RC along the longitudinal extension axis L of the machining tool 43.

The method further comprises generating a second orthogonal projection 8 on the projection plane PJ. The second orthogonal projection 8 corresponds to an orthogonal projection of the hood 5, for example the projection orthogonal to the projection plane PJ of the perimeter of the cylindrical body 51 of the hood 5 and/or of the bristles 52.

The method further comprises a step of detecting 120 a potential collision between the machining tool 43 and the hood 5. The potential collision may be determined by a comparison between the first orthogonal projection 7 of the machining tool 43 (or solid of revolution 6) and a second orthogonal projection 8 of the hood 5 on the projection plane PJ. The comparison may be a positional comparison between the two projections.

For example, the method determines the presence of a potential collision between the machining tool 43 and the hood 5, in response to a determination that the minimum distance between the first orthogonal projection 7 and the second orthogonal projection 8 reaches a predetermined distance.

The predetermined distance may include a distance greater than or equal to zero. A distance equal to zero may indicate that the first orthogonal projection 7 and the second orthogonal projection 8 intersect at a single point. The predetermined distance may be greater than zero so as to take into consideration any vibrations/movements of the machine M or of the components themselves of the machine M, for example vibrations/movements of the hood 5 and/or of the machining unit 41.

Detecting a potential collision between the machining tool 43 and the hood 5, may further comprise determining that the first orthogonal projection 7 intersects the second orthogonal projection 8 of the hood in one or more points.

The execution of the detection of a potential collision may be performed for each position of a first set of predetermined positions B1, B2, B3, and/or a second set of predetermined positions C1, C2, C3.

For this purpose, the method comprises determining a first set of positions B1, B2, B3 representing a set of positions that the machining unit 41 assumes rotating around the axis of rotation C to perform a series of machining on the work piece P.

The method may further comprise determining a second set of positions C1, C2, C3 representing a second set of positions that the machining tool 43 may assume about a second rotation axis K to perform machining on the work piece P.

The orthogonal projections derived from the set of positions B1, B2, B3 and/or C1, C2, C3 can be considered as placed on each other or individually in order to detect a potential collision between the machining tool 43 and the hood 5.

For example, the first orthogonal projection 7 can correspond to the single orthogonal projection 7 obtained for each position placed on each other in such a way as to compare a combined orthogonal projection 7 with a second orthogonal projection 8 of the hood.

The method may also include a step in which the control unit presents on the user interface connected thereto an information indicative of the potential collision detected between the machining tool 43 and the hood 5.

The method may also comprise a step of determining the optimal machining height 130. This step comprises the determination of the height of the machining tool 43 with respect to a work plane 33 of the machine M and the determination of the optimal operative height of the hood 5.

The height of the hood 5 can be adjusted with respect to the work plane 33 so that the height of the hood 5 is higher than the height of the machining tool 43, thus avoiding a potential collision between the machining tool 43 and the hood 5.

The optimal height of the hood 5 can be defined so as not to exceed a threshold value with respect to the height of the machining tool 43.

The height of the hood 5 can be functionally adjusted to the optimal machining height. The step of adjusting the height of the hood 5 can be carried out before performing any one or a sequence of operations on the work piece P to be machined.

For example, the adjustment of the height of hood 5 can be carried out before the machining unit 41 assumes a position of the first set of predetermined positions B1, B2, B3 and/or of the second set of predetermined positions C1, C2, C3.

The method also includes a step in which the height of the hood 5 can be adjusted so as to avoid collisions between the hood 5, in particular the ring 50, which is connected below the bristles 52 and above the cylindrical body 51, and the piece P. For this purpose, the height of the work piece P to be machined is acquired and the height of the hood 5 is adjusted, so that the height of the ring 50 is greater than the height of the work piece P.

As is evident from the description, the collision detection method for a machine tool control unit M allows to determine a potential collision between the hood 5 and the machining tool 43 of the machine M in a simple and efficient manner.

The method further allows to determine an optimal height that facilitate efficient suction/blowing and prevents potential collisions between the hood 5 and the working tool 43 of the machine M, the height of the hood 5 can therefore be automatically adjusted in a simple and efficient manner.

The present invention has been described for illustrative but not limitative purposes, according to its preferred embodiments, but it is to be understood that variations and/or modifications may be made by those skilled in the art without departing from the relative scope of protection, as defined by the appended claims.

## Claims

1. Collision detection method for a machine tool control unit (M), wherein said machine tool (M) comprises a base (3), which extends along a first axis (X), on which a work plane (33) is defined, a machining unit (41) of said piece (P) comprising a machining tool (43), and a hood (5) for suction or blowing, capable of sucking or blowing the residual material deriving from the machining of the piece (P), wherein said hood (5) completely surrounds said machining unit (41) and can be extended or reduced along an orthogonal development direction (O) with respect to said first axis (X), wherein said piece (P) and said machining unit (41) move with relative motion along said first axis (X) and said machining unit (41) translates along at least one second axis (Y), orthogonal to said first axis (X), said method being **characterized in that** it comprises the following steps:
a. determining (110) at least one topological characteristic (44, 62) of said machining tool (43);
b. selecting at least one reference point (R) on a longitudinal development axis (L) of said machining tool (43), wherein said at least one reference point (R) is arranged in correspondence with said at least one topological characteristic (44, 62);
c. generating, by means of a sectional plane (S) passing through said at least one reference point (R), a first orthogonal projection (7) of said machining tool (43) on a projection plane (PJ) orthogonal to said development direction (O); and
d. detecting (120) a potential collision between said machining tool (43) and said hood (5), based on a comparison between said first orthogonal projection (7) and a second orthogonal projection (8) of said hood (5) on said projection plane (PJ).

2. The method according to claim 1, wherein detecting (120) a potential collision between said machining tool (43) and said hood (5) comprises determining that a minimum distance between said first orthogonal projection (7) and said second orthogonal projection (8) of said hood (5) on said projection plane (PJ) reaches a predetermined distance.

3. The method according to claim 1 or 2, wherein determining a topological feature (44, 62) comprises determining a topological feature (62) of a solid of rotation (6) obtained by rotating said machining tool (43) around a said longitudinal development axis (L) of said machining tool (43), and wherein generating a first orthogonal projection (7) comprises generating a first orthogonal projection (7) of said solid of rotation (6) on said projection plane (PJ).

4. Method according to any one of the preceding claims, wherein said control unit is operatively connected to a user interface, to present on said interface information indicative of said potential collision between said machining tool (43) and said hood (5).

5. Method according to any one of the preceding claims, wherein said machining unit (41) is rotatable about a first rotation axis (C) perpendicular to said projection plane (PJ), and wherein said method further comprises
determining a first set of positions (B₁, B₂, B₃) that said machining unit (41) assumes around said first axis of rotation (C) to perform the machining on said piece (P); and
carrying out the steps (a)-(d) for each position of the first set of determined positions (B₁, B₂, B₃).

6. Method according to any one of the preceding claims, wherein said machining tool (43) can be rotated around a second rotation axis (K), perpendicular to said longitudinal development axis (L), and wherein said method further comprises:
determining a second set of positions (C₁, C₂, C₃) that said machining tool (43) assumes around said second rotation axis (K), to perform the machining on said piece (P); and
carrying out the steps (a)-(d) for each position of the second set of determined positions (C₁, C₂, C₃).

7. The method according to any one of the preceding claims, wherein in response to a detection of potential collision between said machining tool (43) and said hood (5), the method further comprises:
acquiring a height of said machining tool (43) with respect to a working plane (33) of said machine tool (M), and
adjusting a height of said hood (5) with respect to said working plane (33), so that said height of said hood (5) is higher than said height of said machining tool (43), preferably wherein the method further comprises adjusting said height of said hood (5) before performing the machining on said piece (P).

8. Method according to any one of the preceding claims, wherein said hood (5) comprises a ring (50) to which a cylindrical body (51) is connected at the top, and a plurality of bristles or the like (52) at the bottom, wherein the method further comprises
acquiring the height of said piece (P) to be machined and adjusting the height of said hood (5), so that the height of said ring (50) is greater than the height of said piece (P).

9. The method according to any one of the preceding claims, wherein the method further comprises
a. positioning and fixing the piece (P) on said working surface (33);
b. performing one or more machining operations on the piece (P) using the machining tool (43);
c. operating said hood (5) to remove the residual material deriving from said one or more machining of the piece (P).

10. The method according to any one of claims 2-9, wherein said predetermined distance comprises a distance greater than or equal to zero.

11. The method according to any one of the preceding claims, wherein detecting a potential collision between said machining tool (43) and said hood (5), comprises determining that said first orthogonal projection (7) intersects with said orthogonal projection of said hood (5).

12. Method according to any one of the preceding claims, wherein said sectional plane (S) is orthogonal to said longitudinal development axis (L).

13. The method according to any one of the preceding claims, wherein said topological feature (44, 62) preferably comprises a protrusion or a recess along the surface of said machining tool (43), optionally wherein said protrusion develops along a surface portion of said machining tool (43) and comprises a maximum distance with respect to said longitudinal development axis (L), said maximum distance being greater than or equal to at each of the distances of the remaining topological characteristics of said machining tool (43) with respect to said longitudinal development axis (L).

14. Machine tool (M), wherein said machine tool (M) comprises a control unit, a base (3), which extends along a first axis (X), on which a work plane (33) is defined, a machining unit (41) of said piece (P) comprising a machining tool (43), and a suction or blowing hood (5) capable of sucking or blowing the residual material deriving from the machining of the piece (P), wherein said hood (5) completely surrounds said a machining unit (41) and can be extended or reduced along a development direction orthogonal (O) with respect to said first axis (X), wherein said piece (P) and said machining unit (41) move with relative motion along said first axis (X) and said machining unit (41) translates along at least one second axis (Y), orthogonal to said first axis (X), said control unit being configured for carrying out the method according to any one of claims 1-13.

15. Machine tool (M) according to claim 14, wherein said machining unit (41) is rotatable around a first rotation axis (C), and wherein said machining tool (43) is rotatable around a second rotation axis (K) perpendicular to a longitudinal development axis (L) of said machining tool.
